# EUROPÄISCHE PATENTANMELDUNG

(11) **EP 2 581 313 A1**
(43) Veröffentlichungstag der Anmeldung: **17.04.2013**
(21) Anmeldenummer: 11185074.9
(22) Anmeldetag: 13.10.2011
(51) Int. Cl.: B65B 5/10

(54) **Vorrichtung zur Überprüfung bewegter Tabletten**

(71) Anmelder: UHLMANN PAC-SYSTEME GmbH & Co. KG, 88471 Laupheim (DE)
(72) Erfinder: Singer, Anton, 88471 Laupheim (DE)
(74) Vertreter: Wächter, Jochen

(57) **Zusammenfassung**

Die Vorrichtung zur Überprüfung bewegter Tabletten umfasst ein als Hohlkörper ausgebildetes Sensorelement (2) mit einem geschlossenen umlaufenden Mantel (4) aus einem leitenden Material und einer offenen oberen Eintrittsseite (6) sowie einer offenen unteren Austrittsseite (8). Das Sensorelement (2) definiert in seinem Innenraum von der Eintrittsseite (6) zur Austrittsseite (8) einen Durchgangspfad (A) für die Tabletten (20), und der Mantel (4) des Sensorelements (2) ist über einen Widerstand (12) geerdet (10). Die Vorrichtung umfasst weiterhin mindestens ein nahe der Außenfläche des Mantels (4) des Sensorelements (2) angeordnetes Aufnahmeelement (16) aus leitendem Material, das von der Außenfläche des Mantels (4) des Sensorelements (2) galvanisch getrennt ist.

## Beschreibung

Die vorliegende Erfindung betrifft eine Vorrichtung zur Überprüfung bewegter Tabletten.

Derartige Vorrichtungen werden in der pharmazeutischen Industrie beispielsweise zum Zählen von Tabletten während deren Abfüllung oder, in komplexeren Ausführungsformen, auch zur Überprüfung der Farbe, Form und teilweise auch der Inhaltsstoffe der Tabletten eingesetzt.

Eine dabei häufig verwendete Technik liegt darin, die Tabletten durch gegenüberliegende Platten eines mit einem hochfrequenten Wechselfeld geladenen Kondensators hindurchfallen zu lassen bzw. hindurchzubewegen. Aufgrund der hindurchtretenden Tablette wird auf den Kondensatorplatten ein Dipolmoment induziert, das von einem geeigneten Sensor ausgelesen werden kann. Eine derartige Vorrichtung ist beispielsweise aus EP 2 030 895 A1 bekannt.

Eine andere Ausgestaltung eines solchen kapazitiven Sensors mit mehr als zwei Kondensatorplatten, die ansonsten nach demselben Prinzip arbeiten, ist beispielsweise aus US 6,504,387 B1 bekannt.

Der Nachteil sämtlicher kapazitiver Messverfahren liegt in erster Linie darin, dass die Tabletten während des Hindurchtretens durch den Detektor eine definierte Ausrichtung beibehalten müssen, damit verwertbare Messergebnisse bei akzeptabler Toleranz erhalten werden. Insbesondere bei sich drehenden oder von einer günstigen Bahn abweichenden Tabletten werden abweichende Messerergebnisse erzielt, sodass eine sichere Detektion gebrochener Tabletten und deren nachfolgende Ausscheidung nicht unter allen Umständen gewährleistet werden kann.

Der vorliegenden Erfindung liegt daher die Aufgabe zugrunde, eine Vorrichtung zur Überprüfung bewegter Tabletten zu schaffen, mit der die Tabletten unabhängig von ihrer Position im Sensorfeld erfasst und ausgewertet werden können und eine zuverlässige Detektion von gebrochenen Tabletten selbst bei hohem Durchsatz gewährleistet ist.

Diese Aufgabe wird durch die Merkmale des Anspruchs 1 gelöst.

Erfindungsgemäß weist die Vorrichtung zur Überprüfung bewegter Tabletten ein als Hohlkörper ausgebildetes Sensorelement mit einem geschlossenen umlaufenden Mantel aus einem leitenden Material, einer offenen oberen Eintrittsseite und einer offenen unteren Austrittsseite auf. Dabei definiert das Sensorelement in seinem Innenraum von der Eintrittsseite zur Austrittsseite einen Durchgangspfad für die Tabletten. Außerdem ist der Mantel über einen Widerstand geerdet. Die Vorrichtung umfasst weiterhin mindestens ein nahe der Au-βenfläche des Mantels des Sensorelements angeordnetes Aufnahmeelement aus leitendem Material, das von der Außenfläche des Mantels des Sensorselements galvanisch getrennt ist.

Mit dieser Ausgestaltung gelingt es, ganze Tabletten auf einfache Weise von Bruchstücken zu unterscheiden und unabhängig von der Durchtrittsposition der Tabletten durch den Sensor sowie ihrer Orientierung eine sichere Unterteilung zu gewährleisten.

Zur besseren Auswertung ist das Aufnahmeelement vorzugsweise mit einer Umwandlungs-/ Verstärkungseinheit verbunden ist, welche die im Aufnahmeelement bei Durchtritt einer Tablette durch das Sensorelement erzeugten Spannungsimpulse in ein auswertbares Signal umwandelt oder verstärkt.

Um eine nachgeschaltete Ausscheidevorrichtung gezielt ansteuern zu können, umfasst die Vorrichtung vorzugweise auch eine Auswerteeinheit für die Signale der Umwandlungs-/ Verstärkungseinheit, welche dazu geeignet ist, einen Vergleich zwischen Sollwerten der Umwandlungs-/ Verstärkungseinheit für eine bestimmte Tablettensorte und den von der Umwandlungs-/ Verstärkungseinheit gelieferten Ist-Werten durchzuführen.

Eine funktionssichere Umwandlung und Verstärkung ist beispielsweise dann gewährleistet, wenn die Umwandlungs-/ Verstärkungseinheit einen FET-Transistor umfasst, dessen Gate mit dem Aufnahmeelement verbunden ist.

Vorzugsweise ist das Sensorelement als kurzer Hohlzylinder mit im Wesentlichen kreisförmigem Querschnitt ausgebildet. Die Kreisform führt zu einer gleichmäßigen Verschiebung der Ladungen an der Außenfläche des Mantels des Sensorelements bei Durchtritt einer Tablette durch das Sensorelement, sodass die Ladung ohne abweichende Messergebnisse an jeder beliebigen Stelle der Außenfläche des Mantels abgegriffen werden kann.

Ein besonders geeignetes Material des Mantels des Sensorelements ist ein leitendes Metall, beispielsweise Edelstahl oder Aluminium.

Dieselben Materialen sind auch für das Aufnahmeelement besonders geeignet.

Da sich die Ladungsdichte an der Außenfläche des Mantels in Abhängigkeit von der Tablettengröße ändert, sind zur Detektion unterschiedlicher Tablettengrößen mit demselben Sensoraufbau vorzugsweise mehrere Aufnahmeelemente mit zugehörigen Umwandlungs-/ Verstärkungseinheiten um die Außenfläche des Mantels des Sensorelements verteilt, wobei jeder Sensorpfad unterschiedlich kalibriert ist.

Vorzugsweise ist die galvanische Trennung zwischen Sensorelement und Aufnahmeelement durch ein lsolationselement in Form einer Isolationsschicht auf dem Aufnahmeelement hervorgerufen.

Der Mantel weist vorzugsweise eine Dicke von zwischen 0,2 und 0,8 mm sowie einen Durchmesser von zwischen 10 und 60 mm auf. Der Abstand zwischen der Eintrittsseite und der Austrittsseite liegt vorzugsweise zwischen 5 und 20 mm. Mit diesen geometrischen Ausmaßen gelingt es, eine Vielzahl verschiedener Tablettenformen zuverlässig ohne weitere Einstellungen zu detektieren.

Bei Verwendung eines Widerstands zwischen Mantel und Erde von zwischen 10 und 500 MΩ, vorzugweise zwischen 200 und 300 MΩ, wird der Aufbau einer elektrostatischen Aufladung verhindert, die eine Signaldrift zur Folge hätte. Gleichzeitig ist der Widerstand notwendig, damit die elektrischen Ladungen nicht sofort abfließen und somit überhaupt ein Influenzeffekt am Aufnahmeelement registriert wird.

Das Aufnahmeelement ist vorzugweise als Platte ausgebildet, die beispielsweise eine dem Mantel zugewandte Fläche von ca. 5 mal 5 mm aufweist. Auf diese Weise wird besonders einfach eine Ladungstrennung im Aufnahmeelement induziert, welche der ursprünglichen Information aus dem Inneren des Sensorelements entspricht.

Eine besonders bevorzugte Anwendung der erfindungsgemäßen Vorrichtung zur Überprüfung bewegter Tabletten liegt in ihrer Integration in ein Füllrohr einer Tablettenabfülleinheit.

Somit können die Tabletten unmittelbar vor ihrer Abfüllung überprüft werden, ohne dass der grundlegende Aufbau der Tablettenabfülleinheit geändert wird.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Querschnittsansicht einer ersten Ausführungsform der erfindungsgemäßen Vorrichtung zur Überprüfung bewegter Tabletten mit einer durch sie hindurchfallenden Tablette;
- Fig. 2: ist eine Querschnittsansicht der Vorrichtung aus Fig. 1 in einer Ebene senkrecht zur Ansichtsebene der Fig. 1 inklusive eines vergrößerten Ausschnitts;
- Fig. 3a bis 3c: sind Spannungsdiagramme, die mit der erfindungsgemäßen Vorrichtung zum Überprüfen bewegter Tabletten erhalten wurden; und
- Fig. 4: ist eine schematische Querschnittsansicht einer Tablettenabfülleinheit mit einer integrierten erfindungsgemäßen Vorrichtung zur Überprüfung bewegter Tabletten.

Im Folgenden soll unter dem Begriff "Tablette" jegliche Form von pharmazeutischen Produkten verstanden werden, die fest sind und pharmazeutische Wirkstoffe enthalten, beispielsweise Dragees, Oblongs, Kapseln usw.

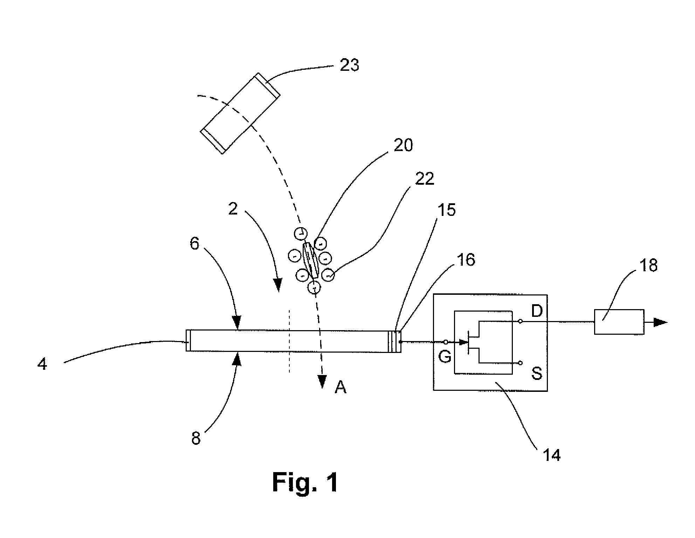

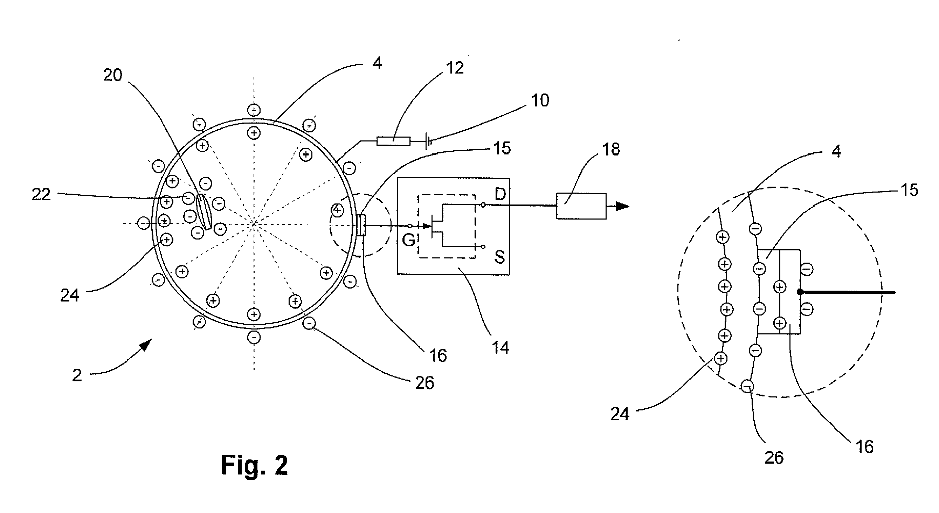

In Fig. 1 und 2 ist eine Ausführungsform der erfindungsgemäßen Vorrichtung zur Überprüfung bewegter Tabletten in zwei verschiedenen Ansichten dargestellt. Die Vorrichtung umfasst ein Sensorelement 2, das als Hohlkörper ausgebildet ist und einen geschlossenen umlaufenden Mantel 4 aus einem leitenden Material aufweist. Außerdem weist das Sensorelement 2 eine offene obere Eintrittsseite 6 sowie eine offene untere Austrittsseite 8 auf. In der dargestellten bevorzugten Ausführungsform ist das Sensorelement 2 als kurzer Hohlzylinder mit im Wesentlichen kreisförmigem Querschnitt ausgebildet.

Der Mantel 4 des Sensorelements 2 ist vorzugsweise aus Metall gebildet, beispielsweise aus Edelstahl oder Aluminium. Der Mantel 4 weist vorzugsweise eine Dicke von zwischen 0.2 und 0.8 mm auf sowie einen Durchmesser von zwischen 10 und 60 mm. Der Abstand zwischen der Eintrittsseite 6 und der Austrittsseite 8 des Sensorelements 2 beträgt vorzugweise zwischen 5 und 20 mm.

Der Mantel 4 des Sensorelements 2 ist über einen Widerstand 12, vorzugsweise hochohmig, geerdet. Hierzu ist die Außenfläche des Mantels 4 über den Widerstand 12 mit Erde 10 verbunden. Der Widerstand 12 beträgt dabei zwischen 10 und 500 MΩ, vorzugweise zwischen 200 und 300 MΩ.

Die Vorrichtung zur Überprüfung bewegter Tabletten weist außerdem mindestens ein nahe der Außenfläche des Mantels 4 des Sensorelements 2 angeordnetes Aufnahmeelement 16 aus leitendem Material auf, dessen Signale durch eine Umwandlungs-/ Verstärkungseinheit 14 verarbeitet werden.

Das Aufnahmeelement 16 ist ebenso wie der Mantel 4 des Sensorelements 2 aus Metal gebildet, vorzugweise aus Edelstahl oder Aluminium. Das Aufnahmeelement 16 ist vorzugsweise als Platte ausgebildet. Diese Platte kann vorzugsweise eine dem Mantel 4 zugewandte Fläche von etwa 5 mal 5 mm aufweisen.

Das Aufnahmeelement 16 ist von der Außenfläche des Mantels 4 des Sensorelements 2 galvanisch getrennt. Die galvanische Trennung zwischen Sensorelement 2 und Aufnahmeelement 16 wird durch ein lsolationselement 15 hervorgerufen, vorzugweise in Form einer Isolationsschicht auf dem Aufnahmeelement 16. Diese kann beispielsweise durch ein isolierendes Klebeband gebildet sein. Viele andere Isolationselemente 15 kommen ebenso in Frage.

Es können auch mehrere Aufnahmeelemente 16 um die Außenfläche des Mantels 4 des Sensorelements 2 verteilt sein. Hierzu sind vorzugsweise auch entsprechend mehrere Umwandlungs-/ Verstärkungseinheiten 14 vorgesehen. Jeder Sensorpfad ist vorzugsweise unterschiedlich kalibriert.

Die Umwandlungs-/ Verstärkungseinheit 14 kann auf verschiedenste Weisen ausgestaltet sein. Wichtig hierbei ist, dass die im Aufnahmeelement 16 bei Durchtritt einer Tablette 20 durch das Sensorelement 2 durch doppelte Influenz induzierte Ladungstrennung weiterverarbeitet wird, wobei als Ausgangspunkt für die weitere Umwandlung/Verstärkung die Spannungsimpulse im Aufnahmeelement 16 dienen.

In der dargestellten beispielhaften Ausführungsform ist die Umwandlungs-/ Verstärkungseinheit 14 als FET-Transistor dargestellt, dessen Gate G mit dem Aufnahmeelement 16 verbunden ist. Ebenso sind andere Transistoren, gegebenenfalls mit zusätzlichen Spannungsanschlüssen, denkbar. Es ist auch möglich, in, vor oder nach der Umwandlungs-/ Verstärkungseinheit 14 weitere Signalbearbeitungsmaßnahmen (Invertierung, Glättung, Potenzierung etc.) durchzuführen.

Die Umwandlungs-/ Verstärkungseinheit 14 ist vorzugsweise mit einer Auswerteeinheit 18 für die Signale der Umwandlungs-/ Verstärkungseinheit 14 verbunden. Diese Auswerteinheit 18 ist dazu geeignet, einen Vergleich zwischen Sollwerten der Umwandlungs-/ Verstärkungseinheit 14 für eine bestimmte Tablettensorte und den von der Umwandlungs-/ Verstärkungseinheit 14 gelieferten Ist-Werten durchzuführen. Im dargestellten Beispielsfall wird das Signal der Drain D des FET-Transistors an die Auswerteeinheit 18 geliefert. Auf Basis des Ergebnisses der Auswerteeinheit 18 kann anschließend eine (nicht dargestellte) Auswurfeinheit für als schlecht klassifizierte Tabletten gesteuert werden.

Im Folgenden soll das Funktionsprinzip der erfindungsgemäßen Vorrichtung zur Überprüfung bewegter Tabletten anhand von Fig. 1 und 2 beschrieben werden. Tabletten 20 führen in der Regel vor der Abfüllung bereits eine definierte elektrostatische Ladung 22 mit sich mit. Diese Aufladung entsteht beispielsweise beim Transport der Tabletten 20 auf einer Vibrationsrinne oder an anderen Stellen des Transportweges und ist in erster Linie auf Reibung zurückzuführen. Durch die verschieden großen Oberflächen von ganzen Tabletten 20 bzw. Bruchstücken von Tabletten ist deren entsprechende individuelle Ladung unterschiedlich, ebenso die elektrischen Feldstärken an deren Oberfläche. Diese Ladung soll nun genutzt werden, um die Tabletten 20 mit der erfindungsgemäßen Vorrichtung zu überprüfen.

Falls die Tabletten 20 nicht von selbst genügend Ladung 22 mitführen, kann der Vorrichtung stromauf eine Aufladevorrichtung 23 für die Tabletten vorgelagert sein. Derartige Aufladevorrichtungen 23 sind aus dem Stand der Technik für verschiedenartige Anwendungen bekannt.

Die Tablette 20 bewegt sich nun entlang eines Durchgangspfades A durch das Sensorelement 2. Im Beispielsfall der Fig. 1 geschieht dies im freien Fall. Beim Durchtritt der Tablette 20 durch den Innenraum des Sensorelements 2 von der Eintrittsseite 6 zur Austrittsseite 8 erzeugen die vorhandenen Ladungen 22 auf den Tabletten 20 durch Influenz eine Ladungstrennung im elektrisch leitenden Mantel 4 und somit auf der Innenseite des Mantels 4 eine Anhäufung von Ladungen 24 (Fig. 2) mit entgegengesetztem Vorzeichen zu den Ladungen 22 auf den Tabletten 20. Mit anderen Worten bewirkt das elektrostatische Feld der Tabletten 20 beim Durchfallen durch das Sensorelement 2 durch Influenz eine Ladungstrennung. Die Ladungsdichte der aufgrund der Ladungstrennung erzeugten Ladungen 24 ist an der Innenfläche des Mantels 4 in unmittelbarer Nähe zur elektrisch geladenen Tablette 20 größer als an weiter von der Tablette 20 entfernten Bereichen der Innenfläche des Mantels 4, wie aus Fig. 2 hervorgeht.

Auf der Außenfläche des Mantels 4 hingegen wird aufgrund der Ladungstrennung eine Ladungsverschiebung der Ladungen 26 erzeugt, welche vom Vorzeichen den Ladungen 22 der Tablette 20 entsprechen. Auf der Außenfläche des Mantels 4 ist die Ladungsdichte bei ringförmigem Mantel 4 gleichmäßig.

Dies bedeutet, dass gleich lange Teilabschnitte der Außenfläche des Mantels 4 überall die gleiche elektrostatische Teilfeldstärke besitzen, und die Summe dieser Teilfeldstärken stimmt mit der vorhandenen elektrostatischen Feldstärke im Inneren des Mantels 4 überein. Die Höhe der Ladungsdichte auf der Außenfläche des Mantels 4 wird durch die Ladung 22 der hindurchfallenden Tablette 20 bestimmt. Insofern ist die Teilfeldstärke an jedem Abschnitt der Außenfläche des Mantels 4 direkt proportional zur Ladung der durch das Sensorelement 2 tretenden Tablette 20.

Bei der vorzugsweise verwendeten Ringform bzw. dem kreisförmigen Querschnitt des Mantels 4 ist der Ort, an dem die Tablette 20 im Innenraum durch das Sensorelement 2 tritt, ohne Einfluss auf die erzeugte elektrostatische Feldstärke jedes Teilabschnitts der Außenfläche des Mantels 4.

Diese gleichmäßige elektrostatische Feldstärke an der Außenfläche des Mantels 4, welche die ursprüngliche Information der Ladung der Tablette 20 beinhaltet, bewirkt nun in dem elektrisch leitenden Aufnahmeelement 16 aufgrund des elektrischen Feldes an der Außenfläche des Mantels 4 wiederum mittels Influenz eine Ladungstrennung, wie insbesondere in der vergrößerten Darstellung rechts in Fig. 2 zu erkennen ist.

Die dabei entstehenden Spannungsimpulse werden in der Umwandlungs-/ Verstärkungseinheit 14 entsprechend umgewandelt und/oder verstärkt und an die Auswerteeinheit 18 übermittelt. Wichtig hierbei ist, dass das Aufnahmeelement 16 und der Mantel 4 galvanisch getrennt sind. Die hochohmige Erdung des Mantels 4 durch den Widerstand 12 verhindert den Aufbau einer elektrostatischen Aufladung, die eine Signaldrift zur Folge hätte. Gleichzeitig sorgt der Widerstand 12 dafür, dass die an der Außenfläche des Mantels 4 entstehenden elektrischen Ladungen 26 nicht sofort abfließen und somit überhaupt ein Influenzeffekt am Aufnahmeelement 16 registriert wird.

Die Auswerteeinheit 18 vergleicht nun die von der Umwandlungs-/ Verstärkungseinheit 14 gelieferten Ist-Werte mit gespeicherten Sollwerten für eine entsprechende Tablettensorte. Die Sollwerte können hierbei vorzugsweise durch Testläufe mit intakten Tabletten im Rahmen einer Kalibrierung erhalten werden.

Bei Abweichung vom vorgegebenen Sollwert (z.B. hinsichtlich der Signalhöhe bzw. des Integrals der Signalkurve) um einen vorbestimmten Wert oder Prozentsatz kann somit ein durch das Sensorelement 2 fallendes Bruchstück einer Tablette entdeckt und durch eine nachgeschaltete Auswurfeinrichtung (nicht dargestellt) entfernt werden. Da die Ladungswechsel sehr schnell erfolgen, kann für jede Tablette 20 eine Auswertung erfolgen, bevor die nächste Tablette 20 das Sensorelement 2 erreicht.

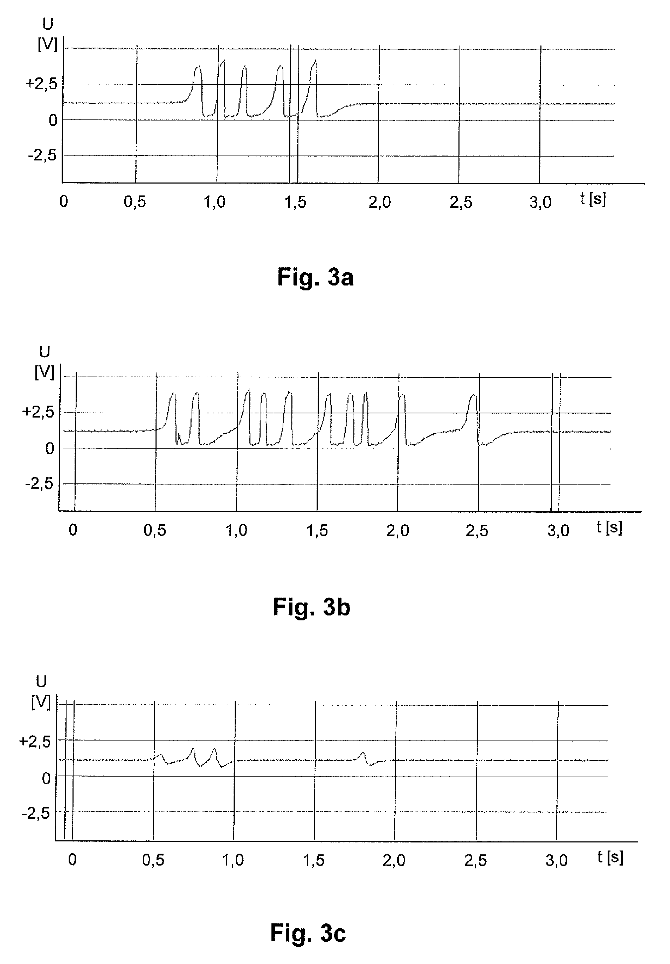

Fig. 3a zeigt die Auftragung der aus der Umwandlungs-/ Verstärkungseinheit 14 stammenden Spannungssignale (in V) über der Zeit (in s) für fünf ganze Tabletten. Deutlich erkennt man die nahezu gleichmäßige Form und Höhe der entsprechenden Peaks.

Fig. 3b zeigt eine identische Darstellung für zehn ganze Tabletten, während Fig. 3c die Darstellung für vier Tablettenbruchstücke zeigt. Bei Einstellung eines geeigneten Schwellwertes kann somit jeder klinisch relevante Bruch von Tabletten detektiert und die entsprechenden Bruchstücke ausgeschieden werden. Besonders wichtig hierbei ist, dass die Orientierung der Tablette, ihr Bewegungsverlauf und ihr Durchtrittsort durch das Sensorelement 2 nahezu keinen maßgeblichen Einfluss auf das Messergebnis haben.

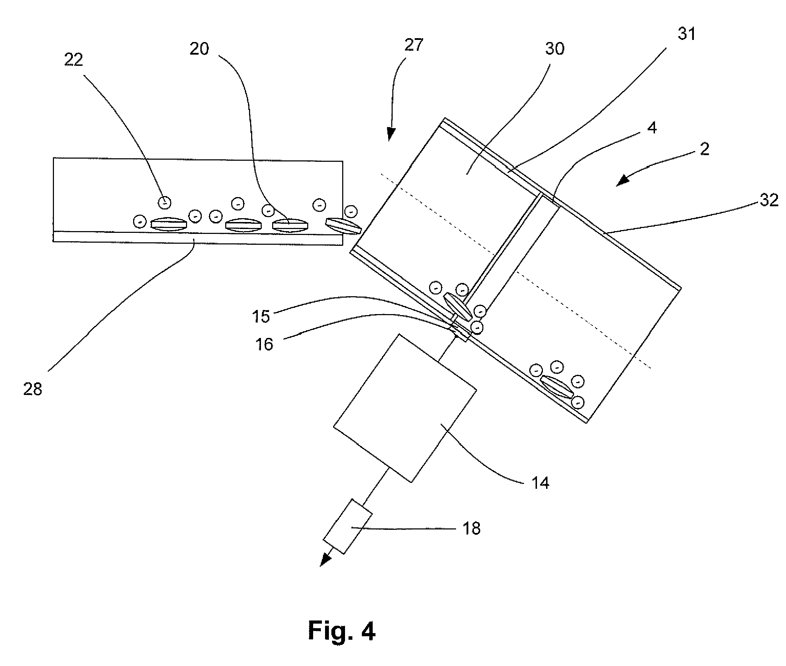

In Fig. 4 ist eine weitere Anordnung der erfindungsgemäßen Vorrichtung zur Überprüfung bewegter Tabletten in einer Tablettenabfülleinheit 27 dargestellt. Die Tablettenabfülleinheit 27 weist eine Schwingrinne 28 auf, mit der die Tabletten 20 zu einem Füllrohr 30 transportiert werden. Im Mantel 32 des Füllrohrs 30 ist nunmehr das Sensorelement 2 integriert. Der Mantel 32 besteht üblicherweise aus isolierendem Kunststoff. Oberhalb des Sensorelements 2 kann ein rohrstutzenförmiger Einsatz 31 aus Metall im Füllrohr 30 vorgesehen sein, auf dem die Tabletten 20 entlanggleiten. Aus Gründen der Übersichtlichkeit sind nicht alle Elemente der Vorrichtung zur Überprüfung bewegter Tabletten dargestellt; allerdings entspricht der Aufbau der Vorrichtung dem aus Fig. 1 und 2.

Wichtig bei dieser Ausführungsform ist, dass der Mantel 4 des Sensorelements 2 im Vergleich zum stromauf gelegenen Innenabschnitt des Füllrohrs 30, im dargestellten Beispielsfall zur Innenfläche des Einsatzes 31, etwas zurückgesetzt ist, damit die Tablette 20 beim Durchlaufen des Füllrohrs 30 nicht die Innenfläche des Mantels 4 berührt, da dies die Messung verfälschen würde. Dementsprechend müssen die Innenradien des Mantels 32 bzw. des Einsatzes 31 des Füllrohrs 30 sowie des Mantels 4 des Sensorelements 2 entsprechend aufeinander abgestimmt sein. Außerdem sind hierbei die Neigung des Füllrohrs 30 sowie die Geschwindigkeit der Tablette 20 zu berücksichtigende Faktoren. Davon abgesehen ist die Funktionsweise der Vorrichtung zum Überprüfen bewegter Tabletten identisch wie oben beschrieben.

In der dargestellten bevorzugten Ausführungsform wurde bislang ausschließlich ein Aufnahmeelement 16 dargestellt. Es ist allerdings möglich, mehrere Aufnahmeelemente 16, beispielsweise zwei oder vier Aufnahmeelemente 16, gleichmäßig verteilt um das Sensorelement 2 herum anzuordnen. Auch die dargestellte Kreisform des Mantels 4 des Sensorelements 2 kann leichten Abwandlungen unterliegen in Richtung einer Ovalität, obwohl die Kreisform bevorzugt ist. Schließlich kann das Aufnahmeelement 16 auch weiter beabstandet vom Mantel 4 angeordnet sein, als es in der Zeichnung dargestellt ist.

## Patentansprüche

1. Vorrichtung zur Überprüfung bewegter Tabletten, mit
einem als Hohlkörper ausgebildeten Sensorelement (2) mit einem geschlossenen umlaufenden Mantel (4) aus einem leitenden Material und einer offenen oberen Eintrittsseite (6) sowie einer offenen unteren Austrittsseite (8), wobei das Sensorelement (2) in seinem Innenraum von der Eintrittsseite (6) zur Austrittsseite (8) einen Durchgangspfad (A) für die Tabletten (20) definiert und wobei der Mantel (4) über einen Widerstand (12) geerdet (10) ist, und
mindestens einem nahe der Außenfläche des Mantels (4) des Sensorelements (2) angeordneten Aufnahmeelement (16) aus leitendem Material, das von der Außenfläche des Mantels (4) des Sensorelements (2) galvanisch getrennt ist.

2. Vorrichtung nach Anspruch 1, **dadurch gekennzeichnet, dass** das Aufnahmeelement (16) mit einer Umwandlungs-/ Verstärkungseinheit (14) verbunden ist, welche die im Aufnahmeelement (16) bei Durchtritt einer Tablette (20) durch das Sensorelement (2) erzeugten Spannungsimpulse in ein auswertbares Signal umwandelt oder verstärkt.

3. Vorrichtung nach Anspruch 2, **dadurch gekennzeichnet, dass** sie eine Auswerteeinheit (18) für die Signale der Umwandlungs-/ Verstärkungseinheit (14) aufweist, welche dazu geeignet ist, einen Vergleich zwischen Sollwerten der Umwandlungs-/ Verstärkungseinheit (14) für eine bestimmte Tablettensorte und den von der Umwandlungs-/ Verstärkungseinheit (14) gelieferten Ist-Werten durchzuführen.

4. Vorrichtung nach Anspruch 2 oder 3, **dadurch gekennzeichnet, dass** die Umwandlungs-/ Verstärkungseinheit (14) einen FET-Transistor umfasst, dessen Gate (G) mit dem Aufnahmeelement (16) verbunden ist.

5. Vorrichtung nach einem der vorangehenden Ansprüche, **dadurch gekennzeichnet, dass** das Sensorelement (2) als kurzer Hohlzylinder mit im Wesentlichen kreisförmigem Querschnitt ausgebildet ist.

6. Vorrichtung nach einem der vorangehenden Ansprüche, **dadurch gekennzeichnet, dass** der Mantel (4) des Sensorelements (2) aus Metall gebildet ist.

7. Vorrichtung nach einem der vorangehenden Ansprüche, **dadurch gekennzeichnet, dass** das Aufnahmeelement (16) aus Metall gebildet ist.

8. Vorrichtung nach einem der vorangehenden Ansprüche, **dadurch gekennzeichnet, dass** mehrere Aufnahmeelemente (16) um die Außenfläche des Mantels (4) des Sensorelements (2) verteilt sind.

9. Vorrichtung nach einem der vorangehenden Ansprüche, **dadurch gekennzeichnet, dass** die galvanische Trennung zwischen Sensorelement (2) und Aufnahmeelement (16) durch ein lsolationselement (15) in Form einer Isolationsschicht auf dem Aufnahmeelement (16) hervorgerufen ist.

10. Vorrichtung nach einem der vorangehenden Ansprüche, **dadurch gekennzeichnet, dass** der Mantel (4) eine Dicke von zwischen 0,2 und 0,8 mm und einen Durchmesser von zwischen 10 und 60 mm aufweist.

11. Vorrichtung nach einem der vorangehenden Ansprüche, **dadurch gekennzeichnet, dass** der Abstand zwischen der Eintrittsseite (6) und der Austrittsseite (8) zwischen 5 und 10 mm beträgt.

12. Vorrichtung nach einem der vorangehenden Ansprüche, **dadurch gekennzeichnet, dass** der Widerstand (12) zwischen Mantel (4) und Erde (10) zwischen 10 und 500 MΩ, vorzugweise zwischen 200 und 300 MΩ, beträgt.

13. Vorrichtung nach einem der vorangehenden Ansprüche, **dadurch gekennzeichnet, dass** das Aufnahmeelement (16) als Platte ausgebildet ist.

14. Tablettenabfülleinheit (27) mit mindestens einer Vorrichtung zur Überprüfung bewegter Tabletten nach einem der vorangehenden Ansprüche, wobei die mindestens eine Vorrichtung zur Überprüfung bewegter Tabletten in mindestens ein Füllrohr (30) der Tablettenabfülleinheit (27) integriert ist.
